(19) Europäisches Patentamt
European Patent Office
Office européen des brevets

(11) **EP 3 293 682 A1**

(12) **EUROPEAN PATENT APPLICATION**

(43) Date of publication:
**14.03.2018 Bulletin 2018/11**

(51) Int Cl.:
***G06N 3/08*** (2006.01)

(21) Application number: **16306154.2**

(22) Date of filing: **13.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventors:
• **BHATTACHARYA, Sourav**
**Blanchardstown, Dublin 15 (IE)**
• **LANE, Nicholas**
**Cambridge, Cambridgeshire CB24 6DD (GB)**
• **FORLIVESI, Claudio**
**2018 Antwerpen (BE)**
• **KAWSAR, Fahim**
**2018 Antwerpen (BE)**

(74) Representative: **Nokia Bell Patent Attorneys**
**Copernicuslaan 50**
**2018 Antwerp (BE)**

(54) **METHOD AND DEVICE FOR ANALYZING SENSOR DATA**

(57) Embodiments relate to a method for analyzing sensor data, executed by an analyzing device (3), comprising:
- determining (S1) a first neural network ($M_1$) in function of a second neural network ($M_0$) comprising at least one pair of fully connected layers (2) of processing units (1), wherein the first neural network ($M_1$) requires less computing resources than the second neural network ($M_0$),
- determining (52) output data (O) in function of input data (I) and of said first neural network ($M_1$), wherein the input data (I) depends on sensor data,
wherein determining (S1) said first neural network ($M_1$) comprises:
- selecting (T1) at least one pair of fully connected layers (2) of said second neural network ($M_0$), the connections between the layers (2) of the selected pair being specified by a weight matrix W of size m x n,
- determining (T3) factorized matrices B of size m x c and A of size c x n, which minimize a weighted sum of a reconstruction error of approximating the weight matrix W by the product B x A and a number of non-zero elements in A,
- inserting (T5) an additional layer (2a) of c processing units (1) between the layers (2) of the selected pair, wherein the factorized matrices B and A specifies the connections between the layers (2) of the selected pair and the additional layer (2a).

FIG. 1

**Description**

FIELD OF THE INVENTION

The present invention relates to the field of deep learning. In particular, the present invention relates to techniques for reducing the complexity of deep learning models.

BACKGROUND

Deep learning has revolutionized the way sensor data is analyzed and interpreted today. In many fields including computer vision, speech recognition and drug discovery, deep learning-based models are the current state-of-the-art. Especially on wearables and IoT devices, deep learning algorithms provide an indispensable service - namely the conversion of noisy raw sensor data streams (e.g., images, audio and accelerometer readings) into application useful data units including counting steps, detecting emotion, and tracking if the user is in a car. However, models generated by deep learning algorithms are often massive in size, e.g., contain over hundreds of millions of parameters to achieve better generalization performances. The improved performance comes at the expense of significantly high resources requirements such as memory, computations and energy-consumption, while running inferences using the models.
One option is to execute deep learning models in a network server, wherein resources are available, for example upon request of a user device. This involves the need of network connectivity and uses bandwidth and battery power.
Another option is to execute the deep learning model locally, e.g. in the edge device or user device itself. However, devices like small cells or tiny wearable and IoT devices have limited resources. Therefore, most of the times, such devices face a binary choice of either running a model using a predetermined amount of resources (e.g., memory, computation and energy) - or not using the model because of lack of available resources.
Runtime layer compression is a known technique for simplifying a deep learning model. A Singular Value Decomposition-based layer compression is followed by an error estimation to reach a tradeoff between complexity reduction and accuracy, without the need of re-training the model.

SUMMARY

It is thus an object of embodiments of the present invention to propose methods and devices for analyzing sensor data, which do not show the inherent shortcomings of the prior art.
Accordingly, embodiments relate to a method for analyzing sensor data, executed by an analyzing device, comprising:

- determining a first neural network in function of a second neural network comprising at least one pair of fully connected layers of processing units, wherein the first neural network requires less computing resources than the second neural network,
- determining output data in function of input data and of said first neural network, wherein the input data depends on sensor data,
  wherein determining said first neural network comprises:

  - selecting at least one pair of fully connected layers of said second neural network, the connections between the layers of the selected pair being specified by a weight matrix W of size m x n,
  - determining factorized matrices B of size m x c and A of size c x n, which minimize a weighted sum of a reconstruction error of approximating the weight matrix W by the product B x A and a number of non-zero elements in A,
  - inserting an additional layer of c processing units between the layers of the selected pair, wherein the factorized matrices B and A specifies the connections between the layers of the selected pair and the additional layer.

Correspondingly, embodiments relate to an analyzing device for analyzing sensor data, comprising means configured for:

- determining a first neural network in function of a second neural network comprising at least one pair of fully connected layers of processing units, wherein the first neural network requires less computing resources than the second neural network,
- determining output data in function of input data and of said first neural network, wherein the input data depends on sensor data,
  wherein determining said first neural network comprises:

- selecting at least one pair of fully connected layers of said second neural network, the connections between the layers of the selected pair being specified by a weight matrix W of size m x n,
- determining factorized matrices B of size m x c and A of size c x n, which minimize a weighted sum of a reconstruction error of approximating the weight matrix W by the product B x A and a number of non-zero elements in A,
- inserting an additional layer of c processing units between the layers of the selected pair, wherein the factorized matrices B and A specifies the connections between the layers of the selected pair and the additional layer.

In some embodiments, the method comprises determining the number c of processing units of the additional layer in function of a processing resource level.

In some embodiments, the method comprises determining a sparsification weight in function of said processing resource level, said weighted sum being determined in function of said sparsification weight.

Determining said factorized matrices B and A may comprise using a sparse dictionary learning technique, wherein B is a dictionary and A is a sparse activation matrix.

The first neural network may be for example determined in response detecting or predicting a resource limitation.

The resource limitation may be for example an available memory limitation, a processor load limitation and/or an available energy limitation.

In some embodiments, the method comprises comparing a reconstruction error determined in function of said weight matrix W and of the product B x A with a predetermined threshold, wherein said additional layer is inserted in response to determining that said reconstruction error is lower than said predetermined threshold.

Some embodiments comprise, in response to determining that said reconstruction error is higher than said predetermined threshold, repeating said determining factorized matrices B and A, with an increased value for the number c of processing units of the additional layer and/or a decreased value for a sparsification weight.

In some embodiments, the analyzing device is a user terminal or an edge computing device.

The analyzing device may comprise at least one sensor providing said sensor data.

Embodiments also relate to a computer program comprising instructions for performing the method mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a graph showing a comparison of an initial neural network and a simplified neural network,
Figure 2 is a flowchart of a method for analyzing sensor data, executed by an analyzing device,
Figure 3 is a flowchart of a method for determining a simplified neural network, executed by the analyzing device, and
Figure 4 is a structural view of the analyzing device.

DESCRIPTION OF EMBODIMENTS

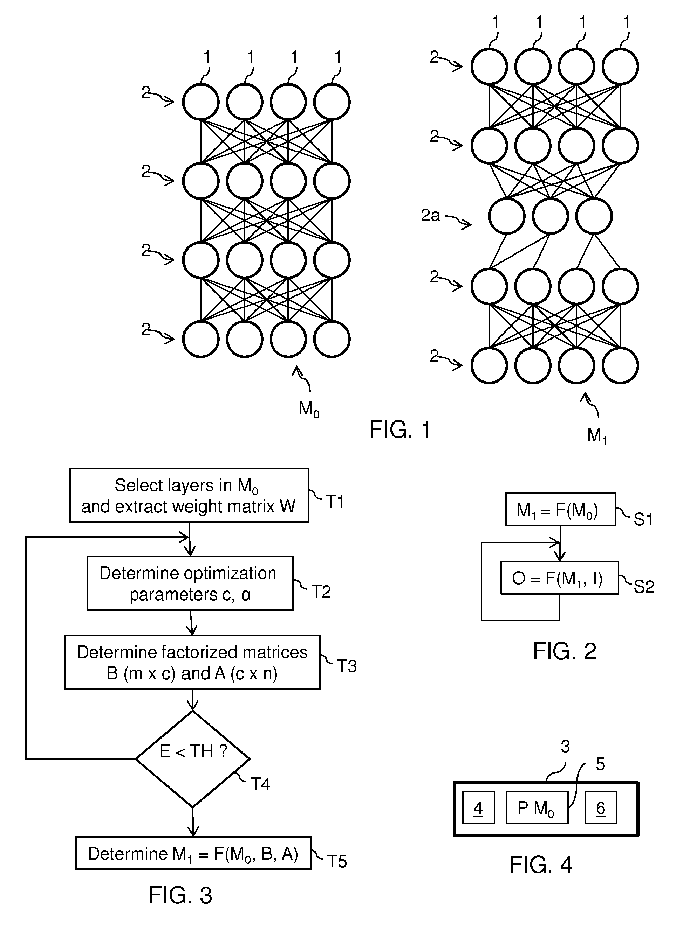

**Figure 1** is a graph showing a partial view of a neural network $M_0$ and a neural network $M_1$.

The neural network $M_0$ may comprise a deep neural network, a convolution neural network or a combination thereof. It includes a plurality of processing units 1 arranged in fully connected layers 2. For respective pairs of fully connected layers 2, a weight matrix W specifies the connections between the processing units 1 of the two layers 2.

In deep learning, there is usually a large number of successive fully connected layers 2. In the context of this description, however, we refer to a neural network $M_0$ which comprises at least one pair of fully connected layers 2.

The neural network $M_0$ is designed to process input data I through successive layers 2 until the final layer 2 generates output data O. The input data I may be determined in function of sensor data, for example from a camera, a microphone, movement sensor, location sensor... The neural network $M_0$ may be designed for example for image or sound recognition, object or face classification, counting events such as steps...

The neural network $M_0$ is stored in an appropriate format on an analyzing device 3. Before being stored on the analyzing device 3, the neural network $M_0$ may have been designed, trained in function of training data and optimized.

The neural network $M_1$ may be regarded as simplified version of the neural network $M_0$. Accordingly, the neural network $M_1$ requires less processing resources (memory, processing cycles, energy) than the neural network $M_0$, at the expense of a reduced accuracy.

The neural network $M_1$ comprises at least one additional layer 2a inserted between a pair of layers 2 of the neural network $M_0$. The layer 2a comprises less processing units 1 than the corresponding layers 2. Moreover, the layer 2a is not fully connected to the following layer 2, or in other words some of the connecting weights are zero.

The determination and use of the neural network $M_1$ is described hereafter with reference to Figures 2 and 3.

An inference, e.g., classification, using a deep learning model requires a sequence of layer-by-layer state update steps. In case of fully connected feed forward layers 2, the main computational requirement (to update all state of processing units 1 within a layer 2) is multiplying a vector (input to the layer) with the weight matrix W of the layer. In the neural network $M_1$, a decomposition approach breaks the weight matrix W into two smaller components to decrease the total number of operations needed.

**Figure 2** is a flowchart of a method for analyzing sensor data, executed by the analyzing device 3.

The analyzing device 3 determines the neural network $M_1$ in function of the neural network $M_0$ (step S). This involves determining at least one additional layer 2a by an adaptive sparse decomposition of the weight matrix W, as will be described in more details with reference to Figure 3.

Then, the analyzing device 3 determines output data O in function of input data I, by using the neural network $M_1$ (step S2). As explained before, using the neural network $M_1$ uses less resources than using the neural network $M_0$. Step S2 may be repeated with the same neural network $M_1$ for various sets of input data I.

Step S1 may be executed for example in response to determining or predicting that the available processing resources of the analyzing device 3 fall below a predetermined threshold. Accordingly, the analyzing device 3 may use the neural network $M_0$ when enough resources are available, and use the neural network $M_1$ in case of resources limitation.

In another example, step S1 may be executed in response to obtaining the neural network $M_0$, for example when installing an App which use the neural network $M_0$, or in response to a request which requires using the neural network $M_0$.

**Figure 3** is a flow chart of a method for determining the simplified neural network $M_1$ in function of the initial neural network $M_0$ at step S1.

Initially, the analyzing device 3 selects a pair of fully connected layers 2 of the neural network $M_0$, and extracts the corresponding weight matrix W (Step T1). The matrix W has a size of m x n where m and n represents the numbers of processing units 1 of the corresponding layers 2.

Then, the analyzing device 3 determines at least one optimization parameter in function of processing resource level L (step T2). The optimization parameters include at least one of a number of processing units c in the additional layer 2a and a sparsification weight $\alpha$. The processing resource level L represents the available or predicted resources (e.g. the available memory, processing cycle and/or energy) for executing the neural network $M_1$. For example, the lower the processing resources level L, the lower the number of processing units c. For example, the lower the processing resources level L, the higher the sparsification weight $\alpha$.

Then, the analyzing device 3 determines factorized matrices B of size m x c and A of size c x n, which minimize a weighted sum of a reconstruction error of approximating the weight matrix W by the product B x A and a number of non-zero elements in A (step T3). This can be regarded as a sparse dictionary learning task where $W = \{w_1, w_2...w_n\}$ is the input dataset, $B = \{b_1, b_2...b_c\}$ is the dictionary and $A = \{a_1, a_2...a_n\}$ is the representation or a sparse activation matrix. The optimization task can be formulated as:

$$B, A = argmin \sum_{i=1}^{c} ReconstructionError(w_i, Ba_i) + \alpha \, NonZeroWeights(a_i)$$

where $ReconctructionError(w_i, Ba_i)$ is for example the Euclidian norm of the difference $w_i - Ba_i$, and $NonZeroWeights(a_i)$ represents the number of non-zero elements in $a_i$.

Various known techniques may be used for solving this problem. In some embodiments, once a dictionary (factorized matrix B) is learned at a first execution of step T3, further executions of step T3 may include determining the reconstruction (factorized matrix A) in function of a new value of the sparsification weight $\alpha$, keeping the same learned dictionary. This reduce the complexity of step T3.

Then, the analyzing device 3 determines a reconstruction error E of approximating the weight matrix W by the product B x A, and compares the reconstruction error E with a tolerance threshold TH (step T4). The reconstruction error E is for example determined as the root mean square error (RMSE) between W and B x A. The tolerance threshold TH represents the acceptable reduced accuracy of the neural network $M_1$ in comparison with the neural network $M_0$. The tolerance threshold TH may be a predetermined fixed value, may depends on user configuration, and/or may depends on the processing resource level L.

If the reconstruction error E is lower than the tolerance threshold TH, the analyzing device 3 determines the neural network $M_1$ by inserting an additional layer 2a of processing units 1 between the layers 2 selected at step T1 (Step T5). The factorized matrices B and A specifies the connections between the layers 2 of the selected pair and the additional layer 2a. The processing units 1 of the additional layer 2a are simple forwarding unit (in other words their processing function is an Identity function between input values and output values).

In contrast, if the reconstruction error E is higher than the tolerance threshold TH the analyzing device 3 repeats steps T2 to T4. In order to reduce the reconstruction error E, and higher value for c and/or a lower value for $\alpha$ is selected at step T2. At step T3, the previously determined dictionary may be re-used.

The case of E = TH may be regarded as either one of the above situation (E < TH or E > TH).

Steps T1-T5 may be repeated for various pairs of layers 2, thereby further reducing complexity. The described order is illustrative and steps T1-T5 may be executed sequentially, in parallel, in various order.

Referring back to Figure 2, the neural network $M_1$ may be determined (step S1) while the analyzing device 3 is currently performing an inference task by using the neural network $M_0$. In that case, at step T1, the analyzing device 3 may select a pair of layers 2 which has not been processed yet, for example the next layers 2 to be processed, and pursue the inference task by using the neural network $M_1$, based on the intermediate results determined using the initial neural network $M_0$.

The method of Figure 2 and 3 reduces overall memory requirement of a deep neural network at runtime, without requiring access to the training dataset, by finding a decomposition B x A of the original weight matrix W of the model. Significant memory gain is achieved as the decomposition requires a much smaller number of parameters than the original model. Additionally, the method of Figure 2 and 3 results in a large proportion of the decomposed synaptic weights to be sparse (i.e., majority of the weights in A are zero), thus allowing further saving of memory by only keeping the remaining small number of non-zero weights. Moreover, by selecting the optimization parameters c and/or $\alpha$ in function of the processing resource level L, the method of Figure 2 and 3 allows dynamic adaptation of the amount of sparsity, which may be selected to match the current resource availability. This decomposition technique helps to decrease overall memory footprint, execution time and also improves energy-efficiency, however, at the cost of accuracy loss, which is proposed as a trade-off solution.

**Figure 4** is a structural view of the analyzing device 3, which comprises a processor 4 and a memory 5. The memory 5 stores a computer program P which, when executed by the processor 4, causes the analyzing device 3 to execute one of the method described above with reference to Figures 2 and 3.

The analyzing device 3 may be a battery-powered user device such as a smartphone or wearable device, a Internet of Things (IoT) device, a edge computing device...

The analyzing device 3 may comprise one or more sensors 6 which provide the sensor data analyzed by the neural network $M_0$ or $M_1$.

In a first use case example, the analyzing device 3 is a small cell offering deep learning model execution to a number of user devices within its network coverage, such as wearable and IoT devices. As it executes deep learning model $M_0$, the small cell discovers the default required amount of computation and memory would exceed an estimate of its available resources under expected cell load. To cope, it applies the method of Figure 3 to the currently executing layer of model $M_0$, reducing the accuracy of the overall result by interposing a simpler layer between the current and next layer to be evaluated. For example, this reduces the accuracy in this case by 5% but lowers memory and computation by 45% and 60% respectively. As a result the cell is able to service the device load it is currently exposed to.

In this first use case example, the analyzing device may performs the following steps: When the load on a small cell exceeds a predefined level, the small cell sets a small tolerance level and computes a decomposition of a layer to obtain a compressed model. The modified model is deployed and changes in cell load is observed. If the load stays above the predefined level, tolerance level is monotonically increased and the above steps are repeated with the new tolerance level. When the small cell load drops significantly below the predefined level, the original model is again deployed.

In a second use case example, the analyzing device 3 is a battery-powered user device, for example a Smartphone or a wearable device, which has a new service installed and so is now required to execute the neural network $M_0$, which is a portion of deep learning model, with the remainder executing within the network. The analyzing device 3 is unable to do so because of the energy demand would be too great and would lower its device lifetime below the expectation of the user (e.g. 24 hours per recharge). The analyzing device 3 applies the model compression method of Figure 3 to the model, reducing the energy overhead (due to computational complexity) to a level that allows the analyzing device 3 to remain active 24 hours per recharge. The consequence is the accuracy of the model is lowered, for example by 4.5%. The analyzing device 3 may perform the following steps: Based on the available memory on the wearable device and the energy-consumption per inference, a set of decomposition parameters is selected. A decomposition of a layer is performed and a compressed model is generated. The compressed model, meeting the energy and memory requirements, is now permanently deployed on the wearable platform.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for analyzing sensor data, executed by an analyzing device (3), comprising:

   - determining (S1) a first neural network ($M_1$) in function of a second neural network ($M_0$) comprising at least one pair of fully connected layers (2) of processing units (1), wherein the first neural network ($M_1$) requires less computing resources than the second neural network ($M_0$),
   - determining (S2) output data (O) in function of input data (I) and of said first neural network ($M_1$), wherein the input data (I) depends on sensor data,
   wherein determining (S1) said first neural network ($M_1$) comprises:

   - selecting (T1) at least one pair of fully connected layers (2) of said second neural network ($M_0$), the connections between the layers (2) of the selected pair being specified by a weight matrix W of size m x n,
   - determining (T3) factorized matrices B of size m x c and A of size c x n, which minimize a weighted sum of a reconstruction error of approximating the weight matrix W by the product B x A and a number of non-zero elements in A,
   - inserting (T5) an additional layer (2a) of c processing units (1) between the layers (2) of the selected pair, wherein the factorized matrices B and A specifies the connections between the layers (2) of the selected pair and the additional layer (2a).

2. Method according to claim 1, comprising determining (T2) the number c of processing units (1) of the additional layer (2a) in function of a processing resource level.

3. Method according to claim 1 or 2, comprising determining (T2) a sparsification weight ($\alpha$) in function of said processing resource level, said weighted sum being determined in function of said sparsification weight ($\alpha$).

4. Method according to one of claim 1 to 3, wherein determining (T3) said factorized matrices B and A comprise using a sparse dictionary learning technique, wherein B is a dictionary and A is a sparse activation matrix.

5. Method according to one of claim 1 to 4, wherein said first neural network ($M_1$) is determined in response detecting or predicting a resource limitation.

6. Method according to claim 5, wherein said resource limitation is an available memory limitation, a processor load limitation and/or an available energy limitation.

7. Method according to one of claims 1 to 6, comprising comparing (T4) a reconstruction error (E) determined in function of said weight matrix W and of the product B x A with a predetermined threshold (TH), wherein said additional layer (2a) is inserted in response to determining that said reconstruction error (E) is lower than said predetermined threshold.

8. Method according to claim 7, comprising, in response to determining that said reconstruction error (E) is higher than said predetermined threshold, repeating said determining (T3) factorized matrices B and A, with an increased value for the number c of processing units (1) of the additional layer (2a) and/or a decreased value for a sparsification weight ($\alpha$).

9. Method according to one of claims 1 to 8, wherein said analyzing device is a user terminal or an edge computing device.

10. Computer program (P) comprising instructions for performing the method of one of claims 1 to 9 when said instructions are executed by a computer.

11. Analyzing device for analyzing sensor data, comprising means (4, 5, 6, P) configured for:

- determining (S1) a first neural network ($M_1$) in function of a second neural network ($M_0$) comprising at least one pair of fully connected layers (2) of processing units (1), wherein the first neural network ($M_1$) requires less computing resources than the second neural network ($M_0$),
- determining (S2) output data (O) in function of input data (I) and of said first neural network ($M_1$), wherein the input data (I) depends on sensor data,
wherein determining (S1) said first neural network ($M_1$) comprises:

- selecting (T1) at least one pair of fully connected layers (2) of said second neural network ($M_0$), the connections between the layers (2) of the selected pair being specified by a weight matrix W of size m x n,
- determining (T3) factorized matrices B of size m x c and A of size c x n, which minimize a weighted sum of a reconstruction error of approximating the weight matrix W by the product B x A and a number of non-zero elements in A,
- inserting (T5) an additional layer (2a) of c processing units (1) between the layers (2) of the selected pair, wherein the factorized matrices B and A specifies the connections between the layers (2) of the selected pair and the additional layer (2a).

12. Analyzing device according to claim 11, comprising at least one sensor (6) providing said sensor data.

FIG. 1

M₁ = F(M₀) ~S1

O = F(M₁, I) ~S2

FIG. 2

Select layers in M₀
and extract weight matrix W ~T1

Determine optimization
parameters c, α ~T2

Determine factorized matrices
B (m x c) and A (c x n) ~T3

E < TH ? ~T4

Determine M₁ = F(M₀, B, A) ~T5

FIG. 3

FIG. 4

Europäisches
Patentamt

European
Patent Office

Office européen
des brevets

# EUROPEAN SEARCH REPORT

Application Number

EP 16 30 6154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/217369 A1 (ANNAPUREDDY VENKATA SREEKANTA REDDY [US] ET AL) 28 July 2016 (2016-07-28) * abstract * * paragraph [0038] - paragraph [0042] * * paragraph [0069] * * paragraph [0078] - paragraph [0083] * * paragraph [0115] * * figures 1,5A and B,13 * | 1-12 | INV. G06N3/08 |
| A | US 2014/072209 A1 (BRUMBY STEVEN P [US] ET AL) 13 March 2014 (2014-03-13) * the whole document * | 1-12 | |
| A | US 2014/019388 A1 (KINGSBURY BRIAN E D [US] ET AL) 16 January 2014 (2014-01-16) * abstract * * paragraph [0005] * | 1-12 | |

TECHNICAL FIELDS
SEARCHED (IPC)

G06N

The present search report has been drawn up for all claims

| Place of search | Date of completion of the search | Examiner |
|---|---|---|
| The Hague | 2 March 2017 | Appeltant, Lennert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6154

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2017

| Patent document cited in search report | | Publication date | Patent family member(s) | | Publication date |
|---|---|---|---|---|---|
| US 2016217369 | A1 | 28-07-2016 | TW | 201627923 A | 01-08-2016 |
| | | | US | 2016217369 A1 | 28-07-2016 |
| | | | WO | 2016118257 A1 | 28-07-2016 |
| US 2014072209 | A1 | 13-03-2014 | NONE | | |
| US 2014019388 | A1 | 16-01-2014 | NONE | | |

EPO FORM P0459

For more details about this annex : see Official Journal of the European Patent Office, No. 12/82